# FASCICULE DE BREVET EUROPEEN

(11) **EP 1 785 254 B1**
(45) Date de publication et mention de la délivrance du brevet: **21.02.2018**
(21) Numéro de dépôt: 06291644.0
(22) Date de dépôt: 24.10.2006
(51) Int. Cl.: B29C 45/14

(54) **Ebauche d'oculaire avec insert et son procédé de fabrication**
Okularrohling mit Einsatz und Verfahren zu dessen Herstellung
Eyepiece blankt with insert and manufacturing process

(30) Priorité: 15.11.2005 FR 0511550
(43) Date de publication de la demande: 16.05.2007
(73) Titulaire: BNL Eurolens, 01200 Bellegarde sur Valserine (FR)
(72) Inventeur: Clerc, Didier, 01200 Eloise (FR)
(74) Mandataire: Robert, Jean-Pierre

(56) Documents cités:
- US-A- 6 074 196
- US-A1- 2002 176 172
- US-A1- 2004 096 539
- US-B1- 6 554 421

## Description

La présente invention concerne une ébauche d'oculaire fabriquée par injection d'un matériau thermoplastique dans un moule pré équipé d'un insert (en général une feuille découpée et préformée d'un matériau polarisant ou photochrome ou coloré). Elle concerne également un procédé de fabrication pour une telle ébauche.

### ARRIERE PLAN DE L'INVENTION

Ce type de produit est connu. Il sert en particulier pour la fabrication de verres de lunettes ophtalmiques (correcteurs) ou de confort (lunettes de soleil, lunettes de protection...)

On connaît plusieurs modes de fabrication de ce genre de produit. L'un d'entre eux est par exemple illustré par le document US 2004/0217495. Dans ce document, on met en oeuvre un moule en deux parties ouvrantes l'une par rapport à l'autre, l'une des parties définissant une empreinte complexe dans laquelle une sorte de lamage est prévu pour contenir un insert en forme de feuille telle qu'une portion de film polarisée, ce lamage étant défini par plusieurs portions de moules réglables les unes par rapport aux autres.

Le moule ainsi révélé semble être consommateur d'une quantité importante de matière à injecter dont une grande partie constituera une chute lorsqu'il s'agira de réaliser un oculaire à partir de l'ébauche moulée.

En outre, l'ébauche issue de ce moule n'est pas appropriée à une manipulation automatique ni même à la constitution de piles car la surface présentant le film polarisé est en saillie de l'ensemble de l'ébauche et donc exposée à des agressions extérieures susceptibles de rayer ce film.

L'industrialisation du procédé révélé par ce document semble devoir conduire à un matériel compliqué demandant des réglages incessants et précis ayant par conséquent une incidence défavorable sur le coût de revient de l'ébauche fabriquée. Une ébauche d'un oculaire est divulgué par le document US 6 554 421 B1.

### OBJET DE L'INVENTION

Par la présente invention on propose une nouvelle conception d'une telle ébauche d'oculaire permettant de mettre oeuvre un procédé de fabrication beaucoup plus simple au moyen duquel on parvient à un produit compétitif sur le plan économique

### RESUME DE L'INVENTION

A cet effet, l'invention a pour premier objet une ébauche d'un oculaire issue d'un moule dans lequel est placé un insert en feuille avant injection, comportant des marques périphériques d'éjecteur dans laquelle lesdites marques sont à l'extérieur de l'insert. Cette caractéristique est la signature de l'invention. En effet, comme on le verra ci-après, aucune partie de l'insert, qui est un produit noble, n'est consommée pour des parties d'ébauches qui sont par nature destinées à être détruites lors de la fabrication d'un verre de lunette ou d'un oculaire. Chaque marque est portée par une patte qui comporte du côté de l'insert une surépaisseur formant cale d'écartement et de l'autre côté un logement formant un centreur pour la cale d'une ébauche adjacente qui lui est superposée. Grâce à ces pattes, on peut empiler des ébauches les unes sur les autres sans que la surface de l'insert soit au contact de l'ébauche immédiatement inférieure dans la pile, cette surface étant alors protégée à l'égard de l'environnement extérieur.

Le deuxième objet de l'invention est un procédé de fabrication par injection de l'ébauche susdite, au moyen d'un moule ouvrant en deux parties, l'une des parties étant pourvue d'éjecteurs mobiles perpendiculairement au plan de fermeture du moule, procédé qui consiste, à partir du moule ouvert, à :
- placer les éjecteurs en position d'éjection,
- loger entre les éjecteurs l'insert en feuille et l'y retenir par arc-boutement entre les éjecteurs,
- fermer le moule en escamotant les éjecteurs dans la partie correspondante,
- injecter un matériau thermoplastique dans le moule,
- ouvrir le moule après durcissement du matériau thermoplastique,
- placer à nouveau les éjecteurs en position d'éjection,
- extraire l'ébauche composite ainsi obtenue.

Bien entendu, dans un outillage de fabrication, le moule ouvrant comportera une pluralité d'empreintes, chacune d'elles étant pourvue d'au moins trois éjecteurs de manière qu'on puisse réaliser une immobilisation par arc-boutement de l'insert dans chacune des empreintes.

D'autres caractéristiques et avantages de l'invention ressortiront de la description donnée ci-après d'un de ses modes de réalisation.

### BREVE DESCRIPTION DES DESSINS

Il sera fait référence aux dessins annexés parmi lesquels :
- la figure 1 est une vue schématique en plan d'une ébauche d'un oculaire conforme à l'invention,
- la figure 2 illustre par une coupe selon l'une ou l'autre des lignes II-II de la figure 1, un empilement d'ébauches conformes à l'invention,
- les figure 3, 4 et 5 illustrent trois phases du procédé de réalisation de ces ébauches.

### DESCRIPTION DETAILLEE DE L'INVENTION

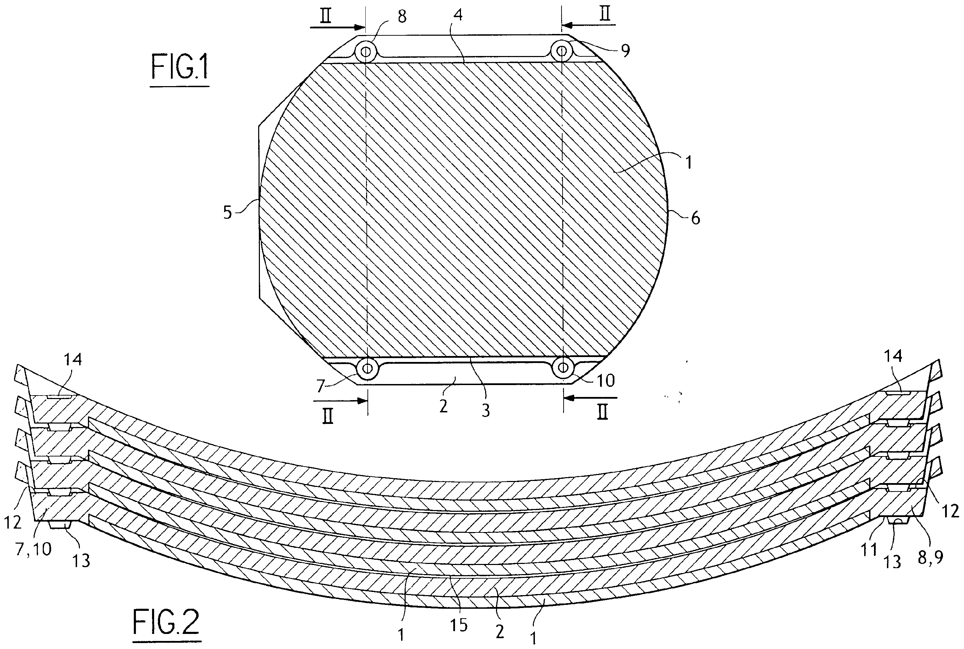

En se reportant aux figures 1 et 2, on constate qu'une ébauche d'oculaire conforme à l'invention est composite avec un film 1 en matériau polarisant et une base 2 en une résine transparente, colorée ou non, voire incluant des pigments photochromiques.

Le film 1 est découpé de manière à présenter deux bords rectilignes 3 et 4 et deux bords d'extrémités courbes 5 et 6. A l'extérieur des bords 3 et 4, l'ébauche comporte des marques d'éjection au droit desquelles les éjecteurs ont agi pour extraire l'ébauche de la cavité du moule de fabrication, comme cela sera expliqué en détail ci-après.

Dans le cas particulier représenté aux figures, ces marques d'éjection sont en réalité des pattes cylindriques limitées par une surface inférieure 11 et une surface supérieure 12 parallèles, la surface inférieure 11 étant pourvue d'une surépaisseur 13 tandis que la surface supérieure 12 présente un logement 14. La distance séparant le fond du logement 14 du sommet de la surépaisseur 13 est telle que lorsque deux ébauches sont superposées comme illustré par la figure 12, il existe un jour 15 entre le film polarisant 1 d'une ébauche supérieure et la base 2 de l'ébauche inférieure sur laquelle est posée l'ébauche supérieure. La surépaisseur 13 constitue donc une cale d'écartement qui pénètre à l'intérieur de l'évidement 14 et qui constitue également un moyen de centrage de deux ébauches superposées l'une par rapport à l'autre.

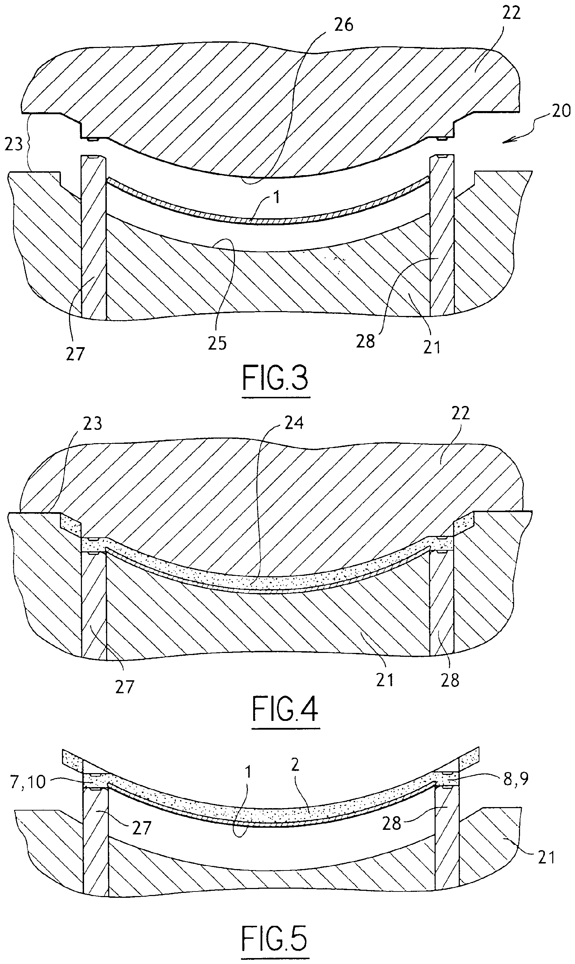

Le moule 20 pour réaliser l'ébauche selon l'invention est représenté schématiquement aux figures 3, 4 et 5, en deux parties 21 et 22, mobiles l'une par rapport à l'autre entre une position ouverte comme représenté à la figure 3 et une position fermée comme représenté à la figure 4. Lorsque le moule est fermé, il définit un plan de joint 23 et une empreinte 24.

La partie inférieure 21 présente une surface inférieure d'empreinte généralement concave 25 tandis que la partie supérieure 22 présente une surface d'empreinte supérieure généralement convexe 26. La partie inférieure 21 est pourvue de quatre éjecteurs traversant la surface inférieure 25. Deux d'entre eux, 27 et 28, sont représentés aux figures.

Le procédé de l'invention consiste tout d'abord à escamoter la partie 22 alors que le moule est ouvert de manière à libérer l'accès à l'empreinte de la partie inférieure 21. Les éjecteurs tels que 27 et 28 sont dans leur position en saillie au-dessus de la surface 25 pour constituer des piliers entre lesquels on peut placer un film polarisant 1, déjà préformé selon une surface sensiblement identique à l'une ou l'autre des surfaces 25 ou 26 mais de dimension transversale, c'est-à-dire celle qui sépare au repos les bords longitudinaux 3 et 4 du film polarisant 1 légèrement supérieur à la distance séparant deux éjecteurs tels que 27 et 28. On comprend que le film polarisant peut donc être immobilisé avant d'être en contact avec la surface 25 entre ces éjecteurs par arc-boutement (coincement) élastique sur ceux-ci. Trois éjecteurs pourraient suffire.

Le film 1 étant ainsi disposé, au moyen de tout mécanisme ou bras robotisé approprié, on procède à la fermeture du moule en ramenant au-dessus de la partie 21 la partie 22 de celui-ci et en faisant coïncider leurs deux surfaces 23 pour constituer le plan de joint du moule. Dans le même temps, on a escamoté les éjecteurs 27, 28 en dessous de la surface 25 comme illustré à la figure 4. On aura noté que la surface supérieure des éjecteurs 27, 28 possède un creux alors que la surface 26 inférieure de la partie de moule 22 présente une portion sensiblement circulaire en regard des éjecteurs avec un bossage. L'empreinte 24 est ainsi conformée de manière qu'au droit des éjecteurs 27, 28, on puisse obtenir les formes des pattes 7, 8, 9 et 10 telles que précédemment décrites.

On procède ensuite à l'injection de la matière thermoplastique destinée à constituer la base 2 de l'ébauche. Cette injection se fera sensiblement parallèlement au plan de joint 23 et dans une direction perpendiculaire au plan des figures 3 à 5, c'est-à-dire dans la direction longitudinale de l'insert 1. On aura prévu une forme d'empreinte 24 telle que les bords curvilignes 5 et 6 de l'insert soient ajustés aux bords correspondants de l'empreinte 24. Dans le cas de figure, l'empreinte 24 comporte un bord curviligne identique au bord 6 et un bord rectiligne tangent au bord 5. Dans ces conditions le flux d'injection de la matière thermoplastique n'entraîne pratiquement aucune variation de la position de l'insert 1 alors que les éjecteurs 27, 28 ont été escamotés.

Une fois la matière durcie, on procède à l'ouverture du moule et à la sortie des éjecteurs 27 et 28 comme cela est illustré à la figure 5. Il est alors possible de prendre en charge l'ébauche de l'invention par tout moyen robotisé.

On comprend que la conception de l'ébauche d'oculaire selon l'invention et son procédé de réalisation permettent de simplifier le dessin de l'empreinte de moulage et donc la conception du moule, d'économiser de la matière polarisante en supprimant l'existence de cette matière au droit des éjecteurs sans pour cela procéder à une découpe complexe des films de matériau polarisant et, en dernier lieu, de faciliter le stockage des ébauches issues du procédé de fabrication selon l'invention, notamment en préservant la face sensible extérieure du film polarisant 1 de toutes agressions de l'environnement.

## Revendications

1. Ebauche d'un oculaire issue d'un moule dans lequel est placé un insert en feuille (1) avant injection, comportant des marques périphériques d'éjecteur, lesdites marques étant à l'extérieur de l'insert (1), **caractérisé en ce que** chaque marque est portée par une patte (7, 8, 9, 10) qui comporte du côté de l'insert (1) une surépaisseur (13) formant une cale d'écartement et de l'autre côté, un logement (14) formant élément de centrage de la cale (13) d'une ébauche adjacente.

2. Procédé de fabrication par injection de l'ébauche selon la revendication 1, à l'aide d'un moule (20) ouvrant en deux parties (21, 22) définissant entre elles au moins une empreinte (24), l'une des parties (21) étant pourvue de plusieurs éjecteurs (27, 28) mobiles perpendiculairement au plan (23) de fermeture du moule (20), **caractérisé en ce qu'**il consiste, à partir du moule ouvert, à :
- placer les éjecteurs (27, 28) en position d'éjection,
- loger entre les éjecteurs (27, 28) l'insert (1) en feuille et l'y retenir par arc-boutement élastique entre eux,
- fermer le moule (20) en escamotant les éjecteurs (27, 28) dans la partie correspondante (21),
- injecter un matériau thermoplastique (2) dans le moule (20),
- ouvrir le moule après durcissement du matériau thermoplastique,
- placer à nouveau les éjecteurs (27, 28) en position d'éjection,
- extraire l'ébauche composite ainsi obtenue.

3. Moule pour mettre en oeuvre le procédé selon la revendication 2, le moule comportant au moins trois éjecteurs et des moyens d'immobilisation de l'insert en feuille avant la fermeture du moule, **caractérisé en ce que** les moyens d'immobilisation sont les au moins trois éjecteurs et que ceux-ci immobilisent l'insert en feuille par arc-boutement élastique.

## Patentansprüche

1. Rohling eines Okulars, der aus einer Form stammt, in welche vor dem Spritzgießen eine Blatteinlage (1) platziert wird, umfassend periphäre Auswerfermarkierungen, wobei sich die Markierungen außerhalb der Einlage (1) befinden,
**dadurch gekennzeichnet, dass** jede Markierung durch eine Lasche (7, 8, 9, 10) getragen wird, die auf der Seite der Einlage (1) eine Erhöhung (13), die einen Abstandskeil ausbildet, und auf der anderen Seite eine Aufnahme (14) umfasst, die ein Zentrierungselement des Keils (13) eines benachbarten Rohlings ausbildet.

2. Herstellungsverfahren durch Spritzgießen des Rohlings nach Anspruch 1, mithilfe einer Form (20), die sich in zwei Teile (21, 22) öffnen lässt, die untereinander mindestens einen Formhohldruck (24) ausbilden, wobei einer der Teile (21) mit mehreren Auswerfern (27, 28) versehen ist, die quer zu der Ebene (23) der Schließung der Form (20) beweglich sind, **dadurch gekennzeichnet, dass** es ausgehend von der offenen Form daraus besteht:
- die Auswerfer (27, 28) in die Auswurfposition zu platzieren,
- die Blatteinlage (1) zwischen die Auswerfer (27, 28) zu platzieren und dort durch elastische Bogenversteifung untereinander zurückzuhalten,
- die Form (20) in dem korrespondierenden Teil (21) zu verschließen, indem die Auswerfer (27, 28) umgeklappt werden,
- ein thermoplastisches Material (2) in die Form (20) einzuspritzen,
- die Form nach dem Aushärten des thermoplastischen Materials zu öffnen,
- die Auswerfer (27, 28) erneut in die Auswurfposition zu platzieren,
- den somit erhaltenen Verbundrohling herauslösen.

3. Form, um das Verfahren nach Anspruch 2 anzuwenden, wobei die Form mindestens drei Auswerfer und Fixierungsmittel der Blatteinlage vor dem Verschließen der Form umfasst, **dadurch gekennzeichnet, dass** die Fixierungsmittel aus den mindestens drei Auswerfern bestehen und dass diese die Blatteinlage durch elastische Bogenversteifung fixieren.

## Claims

1. Blank for an eyepiece, said blank being produced in a mould into which is placed, before injection moulding, a sheet insert (1) including peripheral ejector marks, said marks being on the exterior of the insert (1), **characterized in that** each mark is borne by a tab (7, 8, 9, 10) that includes, on the side of the insert (1), a protrusion (13) forming a spacer shim and, on the other side, a housing (14) forming an element for centring the shim (13) of an adjacent blank.

2. Process for manufacturing via injection moulding around the blank according to Claim 1, using an openable mould (20) of two parts (21, 22) that define, therebetween, at least one cavity (24), one of the parts (21) being provided with a plurality of ejectors (27, 28) that are movable perpendicularly to the plane (23) of closure of the mould (20), **characterized in that** it consists, starting with the mould open, in:
- placing the ejectors (27, 28) in ejection position;
- lodging the sheet insert (1) between the ejectors (27, 28) and retaining it therebetween by wedging in the elastic regime;
- closing the mould (20) by retracting the ejectors (27, 28) into the corresponding part (21);
- injecting a thermoplastic (2) into the mould (20) ;
- opening the mould after the thermoplastic has been set;
- placing once again the ejectors (27, 28) in ejection position;
- extracting the composite blank thus obtained.

3. Mould for implementing the process according to Claim 2, the mould including at least three ejectors and means for immobilizing the sheet insert before closure of the mould, **characterized in that** the immobilizing means are the at least three ejectors and that the latter immobilize the sheet insert by wedging in the elastic regime.
